# EUROPEAN PATENT SPECIFICATION

(11) **EP 0 723 183 B1**
(45) Date of publication and mention of the grant of the patent: **12.06.2002**
(21) Application number: 96300102.9
(22) Date of filing: 04.01.1996
(51) Int. Cl.: G03B 27/40, G03G 15/041

(54) **Photographic exposure apparatus**
Photographisches Belichtungsgerät
Appareil d'exposition photographique

(30) Priority: 17.01.1995 JP 504595; 19.01.1995 JP 669995; 19.01.1995 JP 670095
(43) Date of publication of application: 24.07.1996
(73) Proprietor: NORITSU KOKI CO., LTD., Wakayama-shi, Wakayama (JP)
(72) Inventor: Itojima, Mitsuhiko, Wakayama-shi, Wakayama (JP); Morimoto, Keiji, Wakayama-shi, Wakayama (JP)
(74) Representative: Hillier, Peter

(56) References cited:
- US-A- 4 018 526
- US-A- 4 060 324
- US-A- 4 074 217
- US-A- 4 786 949
- US-A- 5 036 352

## Description

### BACKGROUND OF THE INVENTION

The present invention relates to a photographic exposure apparatus equipped with an optical system including different types of exposure lenses.

Such a photographic exposure apparatus allows an intensity of light emitted from a light source to be passed through a negative film set in a negative mask after reflected on a reflector mirror, and focused by a various focal or zoom lens onto a sheet of photosensitive paper located at the exposure position for reproducing a frame image of the negative film.

The photographic exposure apparatus includes a first shutter for controlling the duration of exposure and a second shutter for shielding unwanted scattered light. The two shutters are controlled by a controller means for closing and opening. In addition, a scanner is provided for reading relevant data of frame images on the negative film loaded in the negative mask.

The first and second shutters in the conventional photographic exposure apparatus are however driven by their respective drive means which are actuated by the controller means, as an example shown in Japanese Utility-model Application 1-149648(1989). As the drive means for the shutters are not simple and the controller means requires a control software, the overall cost of the apparatus will increase.

It is also known that the optical system including the scanner and various focal or zoom lens should be cleaned by removing dust from the surfaces of its lenses manually with the use of a brush, clean rag, or fan blower. The optical system of the apparatus is substantially mounted in the casing and its cleaning will thus be made difficult and troublesome. The cleaning or removal of dust has to be carried out manually and periodically. Above all, dust and dirt on the optical system will hardly be removed completely using a fan blower or the like.

It is an object of the present invention, in view of the foregoing predicaments, to provide an improved photographic exposure apparatus in which the shutter driving mechanism and controlling software are simplified and the removal of dust from its optical system including an exposure lens and a negative sensor is automatically conducted at each printing action.

US-A-4786949 discloses a photographic exposure apparatus comprising an exposure lens; a lens carriage having a light shield region and a lens mount region; a switching means for moving the lens carriage to locate selectively the lens across the axis of exposure light; a first shutter for controlling the exposure light.

The present invention is characterised by a second shutter for preventing the exposure to scattered light; and a mechanical linking means responsive to the movement of the lens carriage for closing and opening the second shutter, such that when the lens on the lens carriage is dislocated from the axis of exposure light in a standby mode, the mechanical linking means closes the second shutter to interrupt the scattered light, and when the lens is across the axis of exposure light in an exposure mode, the mechanical linking means opens the second shutter.

The mechanical linking means may comprise a projection which is disposed on the second shutter and actuated by the lens carriage for opening and closing the second shutter.

The exposure lens may be arranged movable forward and backward by a forward and backward travelling means and a dust removing means may be mounted to a casing for removing dust from the exposure lens during the forward and backward movement of the exposure lens.

A photographic exposure apparatus according to the invention for reading data of a desired image from a negative film with a scanner and projecting the image through an exposure lens onto a sheet of printing paper located at a certain exposure position may have an exposure lens arranged movable forward and backward by a forward and backward travelling means, a scanner mounted to a casing adjacent to the forward and backward travelling means, and dust removing means mounted to the forward and backward travelling means and/or the casing for removing dust from the exposure lens and/or the scanner during the forward and backward movement of the travelling means.

A fan may be mounted to an appropriate location of the casing for assisting or helping the dust removing action of the dust removing means.

The lens carriage may have a reflector mirror mounted on its light shield region and may carry a scanner for reading through the reflector mirror data of a desired frame image on a negative film. The lens carriage allows its light shield region to interrupt the scattered light when it is dislocated from the axis of exposure light during the standby mode.

The standby mode requests the reflector mirror on the lens carriage to stay across the axis of exposure light for allowing the scanner to read the data of the desired image on the negative film while the light shield region of the lens carriage maintains interruption of the scattered light.

The photographic exposure apparatus may be designed in which the lens carriage is controlled in movement for opening and closing the light path by locating its exposure lens out of the axis of exposure light in the standby mode and across the same in the exposure mode, thus eliminating the need of an extra drive mechanism for the second shutter or an intricate software for controlling the movement.

In the photographic exposure apparatus of the invention the second shutter is actuated directly by the movement of the lens carriage for interrupting the scattered light in the standby mode. The second shutter is opened synchronous with the movement of the lens carriage in the exposure mode for exposing the printing paper to the exposure light.

As the lens carriage of the photographic exposure apparatus is moved in the standby mode, it presses against the projection on the second shutter thus closing the second shutter. In the exposure mode, the return movement of the lens carriage allows the opening of the second shutter.

The photographic exposure apparatuses may be designed in which the opening and closing movements of the second shutter is triggered by the lens carriage travelling for locating its exposure lens out of the axis of exposure light in the standby mode and across the same in the exposure light in the standby mode and across the same in the exposure mode, thus eliminating the need of an extra drive mechanism for the second shutter or an intricate software for controlling the movement.

In the photographic exposure apparatus, while the exposure lens on the forward and backward travelling means is being moved to the exposure position for exposure action through it, it is swept with the dust removing means so that its dust or dirt is removed.

In the photographic exposure apparatus, while the forward and backward travelling means is being moved to and from the exposure position for exposure action through its exposure lens and allowing the scanner to read data of a desired image respectively, the exposure lens and the scanner are swept with the dust removing means mounted to the casing and the forward and backward travelling means so that their dust or dirt is effectively removed. Also, if the forward and backward travelling means is moved for allowing its exposure lens to project an image on the negative film and the scanner to read data of the same, the cleaning with the dust removing means can be conducted at every exposure action.

In the photographic exposure apparatus a fan may be disposed in a predetermined location to produce a blow of air towards the exposure lens and the scanner thus assisting or helping the dust removing action of the dust removing means to remove dust or dirt more effectively.

### BRIEF DESCRIPTION OF THE DRAWINGS

Fig. 1 is a schematic view of a photographic exposure apparatus according to Embodiment 1 of the present invention;
Fig. 2 is a plan view of Embodiment 1;
Fig. 3 is a front view of Embodiment 1;
Fig.4 is a perspective view of Embodiment 1;
Fig.5 is an explanatory view showing actions in Embodiment 1;
Fig.6 is a schematic view of a photographic exposure apparatus according to Embodiment 2 of the present invention;

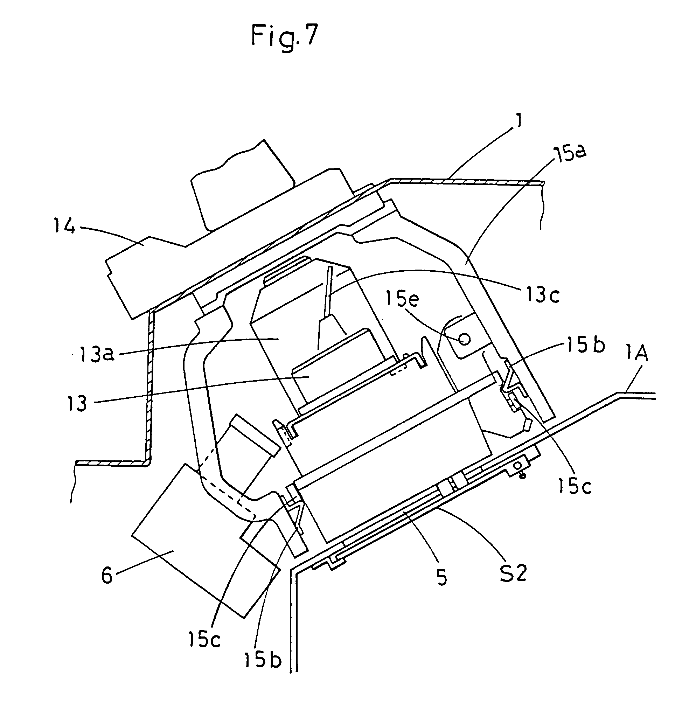

Fig.7 is a front view of Embodiment 2;
Fig.8 is a perspective view of Embodiment 2;
Fig.9 is a side view of a mechanical linking means of Embodiment 2;
Fig.10 is a bottom view of the mechanical linking means of Embodiment 2;
Fig.11 is an explanatory view showing actions in Embodiment 2;
Fig.12 is a schematic view of a photographic exposure apparatus according to Embodiment 3 of the present invention;
Fig.13 is an enlarged cross sectional view of a primary part of Embodiment 3;
Fig.14 is a schematic perspective view of a primary part of Embodiment 3;
Fig.15 is an explanatory view showing a reflector mirror located across the axis of exposure light in Embodiment 3;
Fig.16 is an explanatory view showing a zoom lens located across the axis of exposure light in Embodiment 3;
Fig.17 is an explanatory view of a primary part of Embodiment 3; and
Fig.18 is an enlarged cross sectional view of a primary part of a photographic exposure apparatus according to Embodiment 4 of the present invention.

### DETAILED DESCRIPTION OF THE PREFERRED EMBODIMENTS

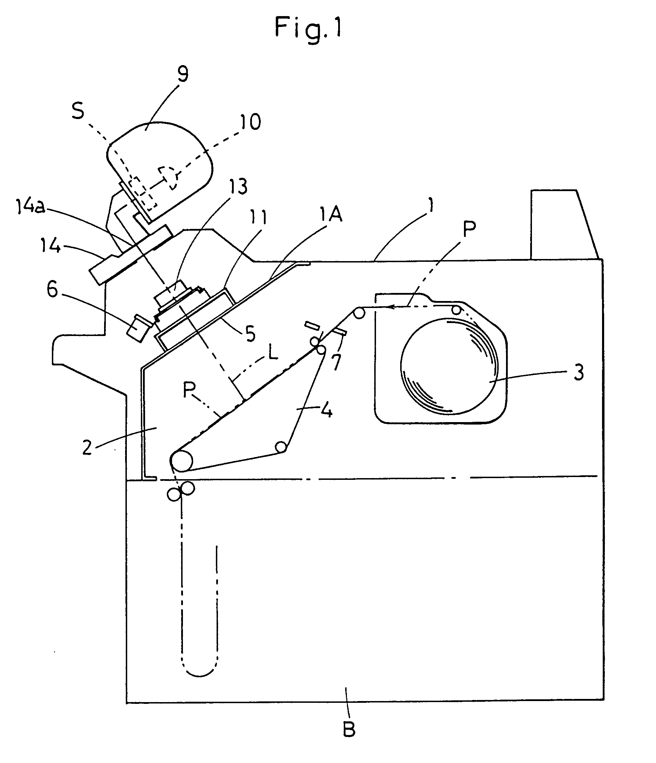

Fig.1 is a schematic view of a photographic exposure apparatus equipped with a shutter device, in which a casing 1 has a dark room 2 therein defined by a partition 1A. There are provided a paper magazine 3, an exposure bed 4, and a cutter 7 in the dark room 2.

A sheet of printing paper P unloaded from a roll in the paper magazine 3 is cut by the cutter 7 into strips of a predetermined size, and transferred to the exposure bed 4 where frame images of a negative film 14a set in a negative mask 14 are printed on the strips before developed in a development station B.

The partition 1A of the casing 1 has an exposure opening 5 therein of which center is located across the exposure axis L.

A lamp box 9 is provided above the casing 1 containing a light source 10 and an exposure controlling shutter S. The shutter S is actuated for opening and closing by a drive means (not shown) which is controlled with a controller means (not shown).

Also, a lens carriage 11 has a group of exposure lenses 13 mounted thereon and is located to cover the opening 5 of the partition 1A.

The lens carriage 11 is formed of a box shape comprising a light shielding wall 11b extending downwardly from the edge of a base plate 11a, and three spaces defined by two inner walls 11c and 11d.

The base plate 11a has two apertures (not shown) provided in both ends thereof where a zoom lens 13a and a various focal lens 13b are installed respectively. The center of the base plate 11a serves as a shutter curtain 11f and has a reflector mirror 13c mounted thereon.

As the lens carriage 11 is moved forward and backward by a switching means 15 (described later), any of the zoom lens 13a, the various focal lens 13b, and the reflector mirror 13c is positioned across the exposure axis L.

With the lens 13a or 13b positioned, a selected image of the negative film is projected at a desired exposure setting onto the printing paper P. When the reflector mirror 13c is positioned, it allows a scanner 6 disposed beside the lens carriage 11 to read data of the selected image and simultaneously, protects the printing paper P from being exposed to scattered light.

The various focal lens 13b comprises a set of different focusing lenses which are detachably mounted to the lens carriage 11 for corresponding to multiple sizes of the negative film.

Also, a light shielding member S3 is provided for blocking scattered light not to expose the printing paper P when closing the opening 5.

The light shielding member S3 has a rim projection S22 extending from the outer edge of a main body S21. The main body S21 has two engaging tabs S23 formed on both ends thereof and is shaped to a size sufficient for closing thoroughly the opening 5 of the partition 1A.

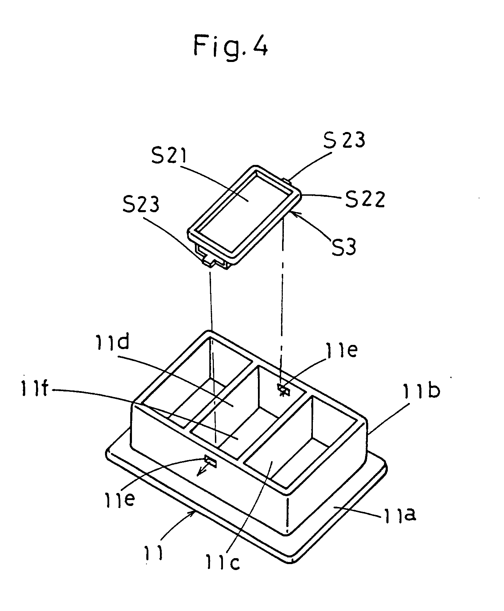

The light shielding wall 11b of the lens carriage 11 has two engaging slots 11e provided in lower regions of the opposite sides thereof respectively for detachably accepting the engaging tabs S23 of the light shielding member S3 (as shown by the arrows in Fig.4).

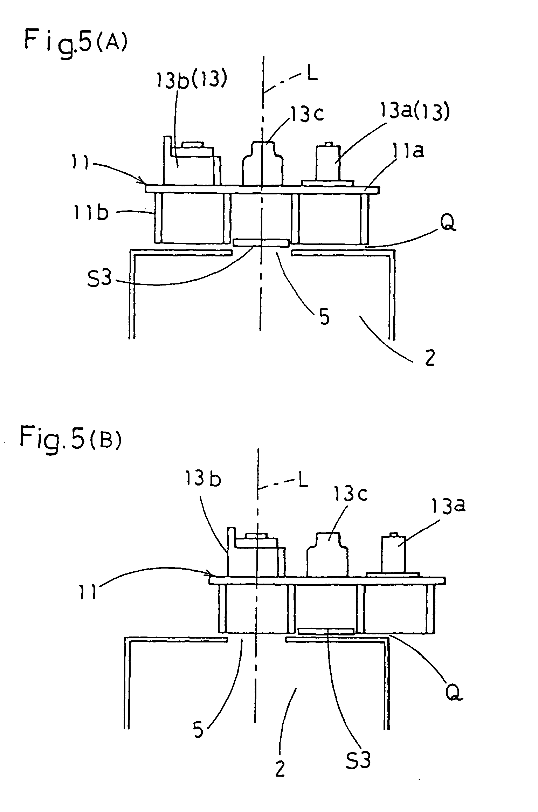

The light shielding member S3 is slightly projected from the bottom of the lens carriage 11 when mounted on the same so that it can close up the gap Q between the lens carriage 11 and the partition 1A to prevent escape of scattered light (Fig.5).

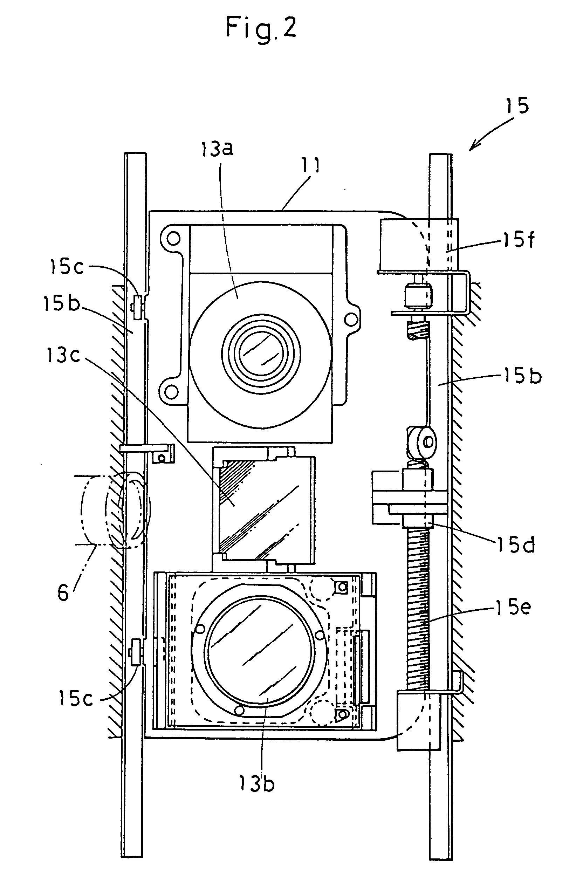

Fig.2 is a plan view of the switching means 15.

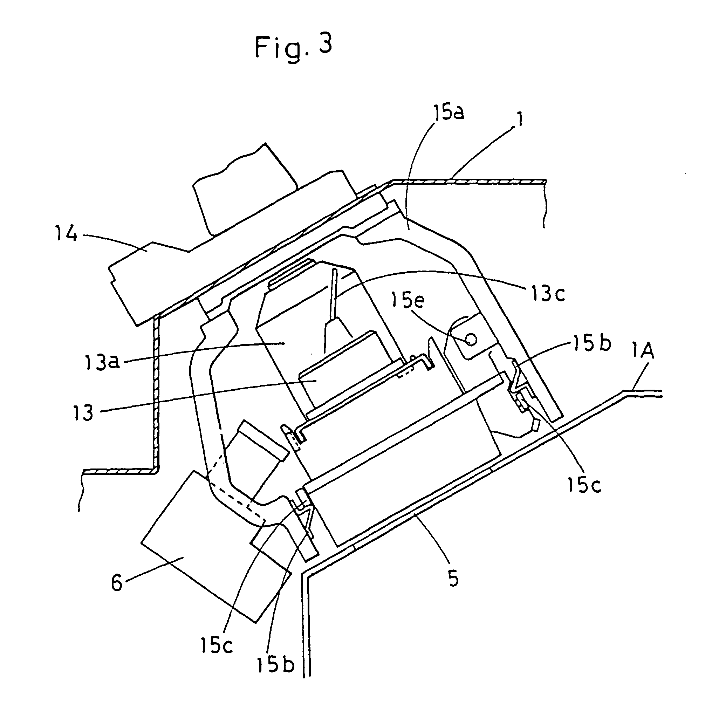

The switching means 15 has two, left and right, rails 15b thereof located on both sides of the opening 5 and joined to the lowermost ends of a frame 15a fixedly mounted on the casing 1 as shown in Fig.3.

The lens carriage 11 is also provided at both sides with rollers 15c which run on the rails 15b for carrying the lens carriage 11 forward and backward along the rails 15b. A nut 15d is mounted on one side of the lens carriage 11.

A leadscrew 15e is arranged parallel to one of the rails 15b and driven by a motor 15f. The nut 15d on the lens carriage 11 is threaded onto the leadscrew 15e so that the lens carriage 11 moves forward and backward along the rails 15b when the leadscrew 15e is rotated in opposite directions.

By the action of the motor 15f determined with a controller means (not shown), the lens carriage 11 is moved and located at the exposure position where any of the zoom lens 13a, various focal lens 13b, and reflector mirror 13c lies across the exposure axis L.

The timing of movement of the lens carriage 11 for exposure action in the exposure apparatus will now be explained.
(1) One of the zoom lens 13a and the various focal lens 13b suitable for the exposure requirement is first set across the exposure axis L by locating the lens carriage 11. This allows the intensity of light to pass across the zoom lens 13a or various focal lens 13b through the opening 5 (Fig.5(B)).
   At the time, the shutter S remains closed.
(2) Upon the shutter S opened, the intensity of light passed through the negative film 14a is allowed to focus on the printing paper P for printing a desired image.
(3) After completion of the exposure to the printing paper P, the shutter S is closed to interrupt the incident light.
(4) The lens carriage 11 is then moved to switch from the lens 13 to the reflector mirror 13c across the exposure axis L (Fig.5(A)). This allows the shutter curtain 11f to close the opening 5 and interrupt the incident light.

During interruption of the exposure action, the negative 14a may be scanned by the scanner 6 for reading relevant data.

It is understood that the light shielding member S3 on the lens carriage 11 may be omitted when the gap Q is minimized enough to inhibit the entering of scattered light with the help of a specific construction of the walls 11b to 11d of the lens carriage 11.

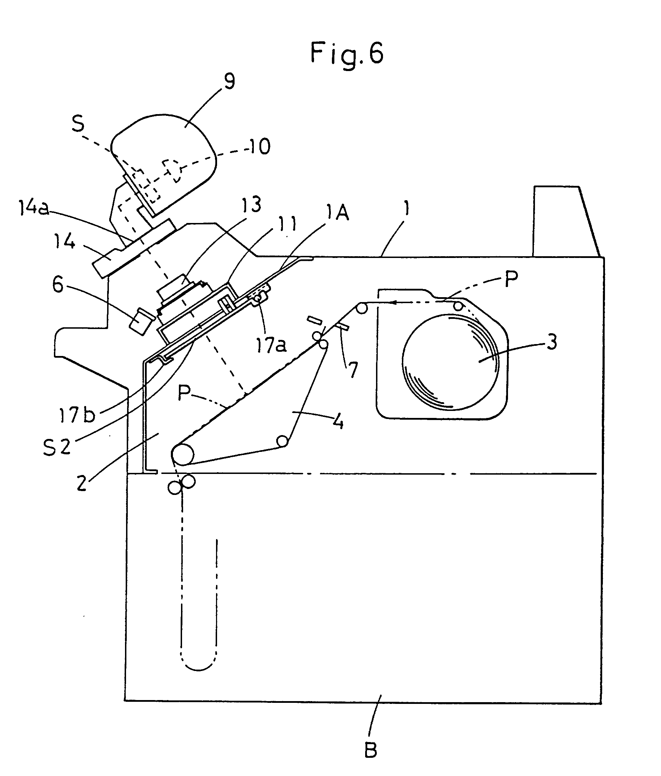

Fig.6 is a schematic view of another photographic exposure apparatus equipped with a shutter device, in which a casing 1 has a dark room 2 therein defined by a partition 1A. There are provided a paper magazine 3, an exposure bed 4, and a cutter 7 in the dark room 2.

A sheet of printing paper P unloaded from a roll in the paper magazine 3 is cut by the cutter 7 into strips of a predetermined size, and transferred to the exposure bed 4 where frame images of a negative film 14a set in a negative mask 14 are printed on the strips before developed in a development station B.

The partition 1A of the casing 1 has an exposure opening 5 therein of which center is located across the exposure axis L.

A lamp box 9 is provided above the casing 1 containing a light source 10 and a first shutter S. The first shutter S is actuated for opening and closing by a drive means (not shown) which is controlled with a controller means (not shown).

Also, a lens carriage 11 has a group of exposure lenses 13 mounted thereon and is located to cover the opening 5 of the partition 1A.

The lens carriage 11 is formed of a box shape comprising a light shielding wall 11b extending downwardly from the edge of a base plate 11a, and three spaces defined by two inner walls 11c and 11d.

The base plate 11a has two apertures (not shown) provided in both ends thereof where a zoom lens 13a and a various focal lens 13b are installed respectively. The center of the base plate 11a has a reflector mirror 13c mounted thereon.

As the lens carriage 11 is moved forward and backward by a switching means 15, any of the zoom lens 13a, the various focal lens 13b, and the reflector mirror 13c is positioned across the exposure axis L.

With the lens 13a or 13b positioned, a selected image of the negative film is projected at a desired exposure setting onto the printing paper P. When the reflector mirror 13c is positioned, it allows a scanner 6 disposed beside the lens carriage 11 to read data of the selected image and simultaneously, protects the printing paper P from being exposed to scattered light.

A switching means 15 is also provided which is identical in the construction to that of Embodiment 1 and will be explained in no more detail.

The various focal lens 13b comprises a set of different focusing lenses which are detachably mounted to the lens carriage 11 for corresponding to multiple sizes of the negative film.

In particular, there is provided a second shutter S2 for preventing the printing paper P from being exposed to scattered light.

The second shutter S2 is designed for closing and opening the opening 5 by the action a mechanical linking means 16 which is synchronized with the movement of the lens carriage 11.

The second shutter S2 comprises a pair of shutter plates S24 and S25 driven by a close/open mechanism 17 for closing and opening the opening 5.

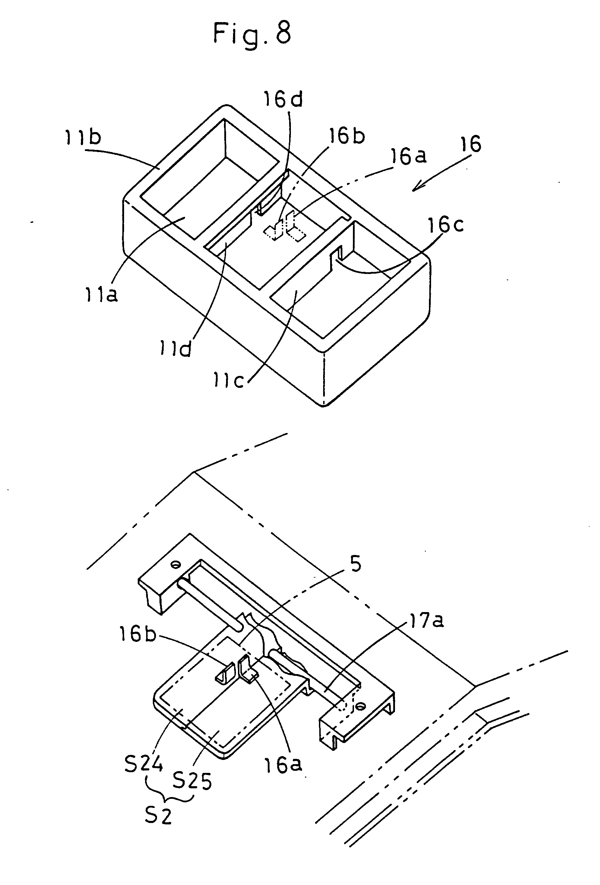

The close/open mechanism 17 is constructed as clearly illustrated in Figs.8 to 10. A guide bar 17a and a guide rail 17b are provided on both sides of the opening 5 respectively. The guide bar 17a is engaged with apertures 17c provided in one ends of their respective shutter plates S24 and S25.

The other ends of the shutter plates S24 and S25 are supported by the guide rail 15b. The one ends of the shutter plates S24 and S25 are also provided with racks 17d. The racks 17d are in mesh with a pinion 17f therebetween which is fixedly mounted on a pinion shaft 17e located in the center of the guide bar 17a.

A resilient member (a compression spring) 17g is mounted between the shutter plate S25 and the pinion shaft 17e for urging the two shutter plates S24 and S25 to be shut up (or advanced towards each other).

The mechanical linking means 16 is arranged as shown in Figs.8 to 10. Two projections 16a and 16b are mounted on their respective shutter plates S25 and S24 of the second shutter S2. The two projections 16a and 16b are dislocated from each other at a right angle to the opening and closing movement of the shutter plates S24 and S25.

The inner walls 11c and 11d of the lens carriage 11 have notches 16c and 16d provided therein respectively. The notches 16c and 16d are sized and located so that they clear the projections 16a and 16b of the two shutter plates S25 and S24.

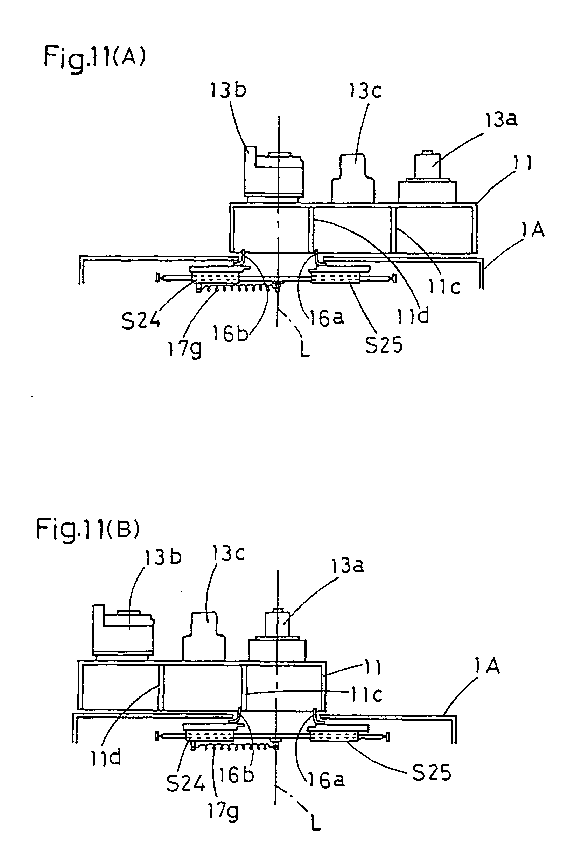

The timing of movement of the second shutter S2 for exposure action in the exposure apparatus will now be explained.

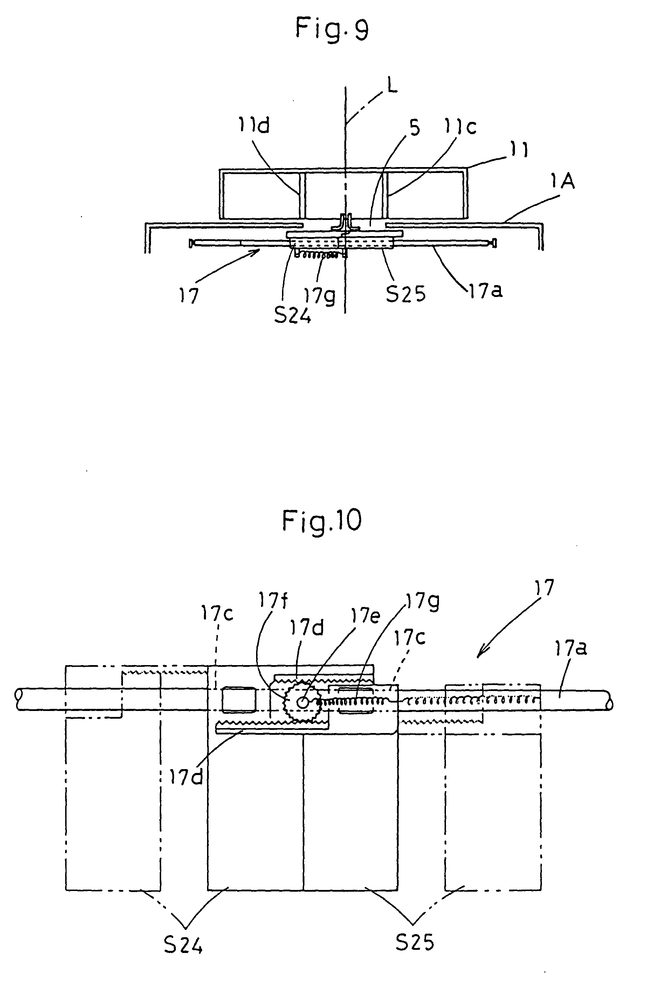

(1) Fig.9 shows the reflector mirror 13c stayed across the exposure axis L while the second shutterS2 being closed.
   The lens carriage 11 is then moved until the various focal lens 13b comes across the exposure axis L. During the movement of the lens carriage 11, the projection 16b passes through the notch 16d of the inner wall 11d while the projection 16a is pressed by the inner wall 11d. This action causes the two shutter plates S24 and S25 to open as resist against the urging force of the resilient member 17g (Fig.11(A)).
   At the time, the first shutter S remains closed.
(2) Upon the first shutter S opened, the intensity of light passed through the negative film 14a is allowed to focus on the printing paper P for printing a desired image.
(3) After completion of the exposure to the printing paper P, the first shutter S is closed to interrupt the incident light.
(4) The lens carriage 11 is then moved until the reflector mirror 13c comes across the exposure axis L. This allows the second shutter S2 to be closed by the urging force of the resilient member 17g and interrupt the incident light (Fig.9).
(5) The lens carriage 11 is moved again until the zoom lens 13a comes across the exposure axis L. While the projection 16a passes through the notch 16c of the inner wall 11a of the lens carriage 11, the projection 16b is pressed by the inner wall 11c. This action causes the shutter plates S24 and S25 to open as resist against the urging force of the resilient member 17g (Fig.11(B)), allowing data of a frame image to be printed on the printing paper P.

According to Embodiment 2, the opening and closing actions of the second shutter S2 are determined by the movement of the lens carriage 11.

It is understood that the lens carriage 11 may be adapted whether or not it provides a light shielding effect.

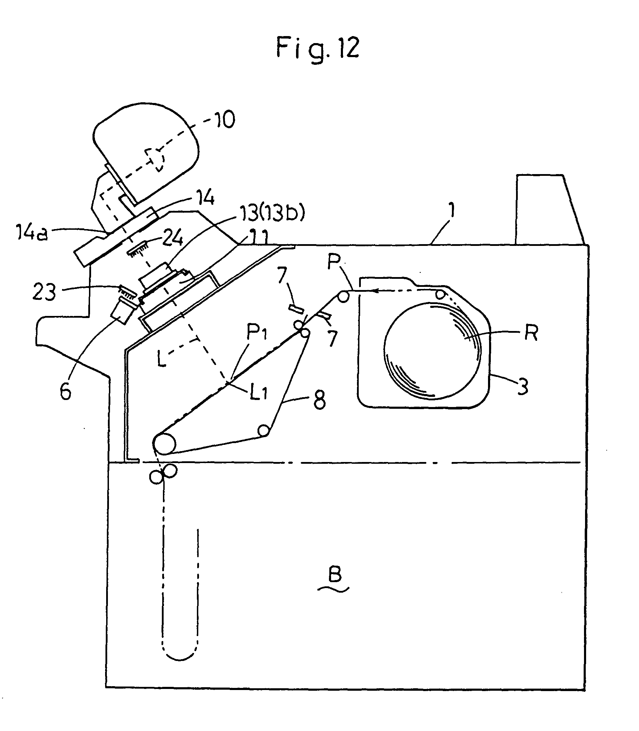

Another embodiment of the present invention will be described referring to Figs.12 to 18.

As best shown in Fig.12, a sheet of printing paper P unloaded from a roll in a paper magazine 3 is cut by a cutter 7 into strips of a predetermined size P₁, and transferred to an exposure location L₁ with a transfer device 8. Denoted by B is a development unit.

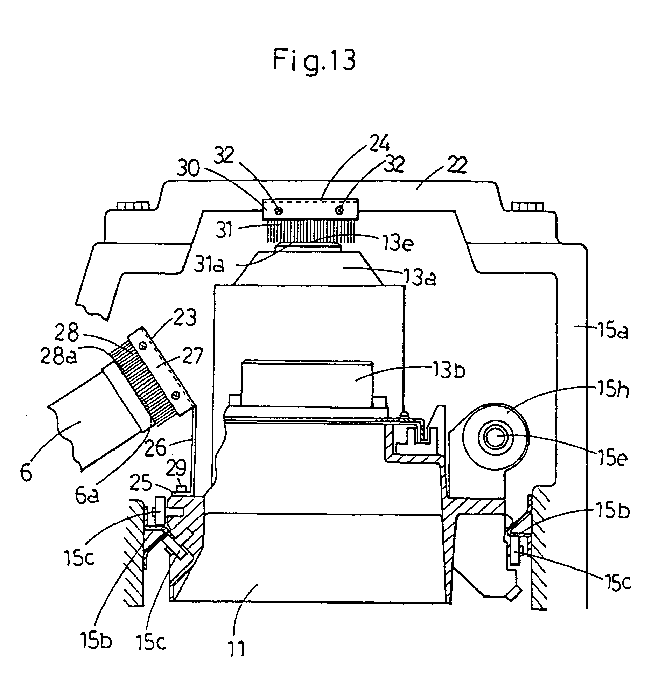

A light source 10 is mounted above the casing 1 to emit an intensity of light which is reflected by a reflector mirror (not shown) and directed to a negative film 14a loaded in a negative mask 14. This allows a desired image on the negative film 14a to be focused and projected through an exposure lens system 13 (Fig.13) consisting substantially of a zoom lens 13a and a various focal lens 13b onto the printing paper P₁ set at the exposure location L₁.

The zoom lens 13a and various focal lens 13b are arranged movable forward and backward across the exposure location L, by a driving means.

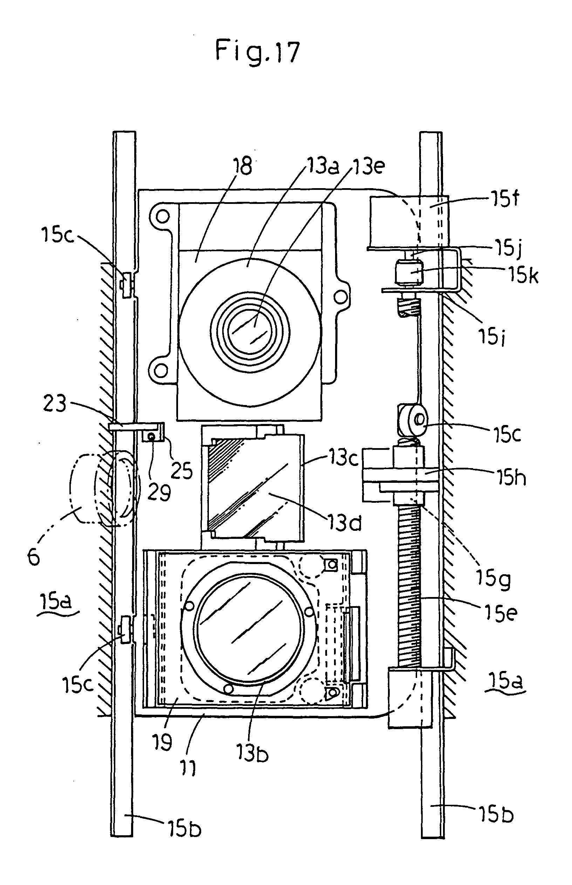

The forward and backward driving means comprises a pair of rails 15b, a lens carriage 11, rollers 15c, a joint 15h, a leadscrew 15e, and a motor 15f, as best shown in Figs.13 and 17.

More specifically, the two, left and right, rails 15b are mounted on the lowermost ends of both arms of a frame 15a fixedly mounted to the casing 1. The lens carriage 11 is supported by the rollers 15c on the rails 15b so that it can run between and along the two rails 15b.

Also, the lens carriage 11 is tilted from the horizontal to stay at a right angle to the exposure axis L (Fig.12).

The joint 15h is coupled to one side of the lens carriage 11 and has a screw hole 15g provided therein. The leadscrew 15e is threaded into the screw hole 15g of the joint 15h. The leadscrew 15e is joined at one end by a coupling 15k to a drive shaft 15j of the motor 15f which is fixedly mounted by a support 15i to the frame 15a. Accordingly, the lens carriage 11 runs with its roller 15c along the rails 15b as the joint 15h is driven by the motor 15f rotating the leadscrew 15e.

This is how the driving means of this embodiment operates.

The various focal lens 13b, reflector mirror 13c, and zoom lens 13a are lengthwisely aligned at predetermined intervals on the lens carriage 11.

More particularly, the various focal lens 13b and the zoom lens 13a are fixedly mounted by a couple of lens plates 18 respectively to the lens carriage 11. The reflective mirror 13c is fixedly mounted between the two lenses 13b and 13a on the lens carriage 11 so that its mirror surface 13d is tilted to extend diagonally of the lens carriage 11.

The various focal lens 13b comprises a group of different focal length lenses which are detachably mounted to the lens carriage 11 for corresponding to multiple sizes of the negative film.

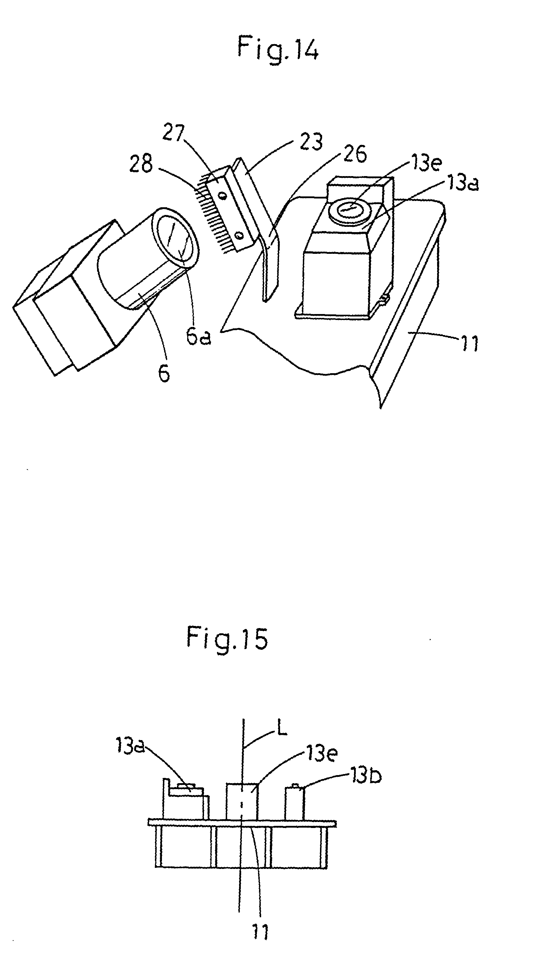

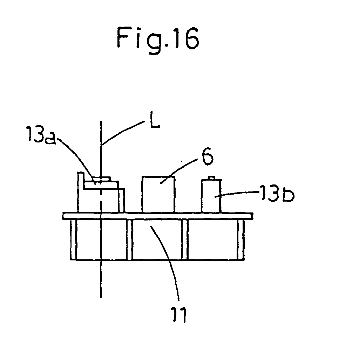

A desired one of the various focal lens 13b, reflector mirror 13c, and zoom lens 13a can thus be located across the exposure axis L by the movement of the lens carriage 11 (Figs.15 and 16).

There is a scanner 6 provided beside the lens carriage 11 in the casing 1 for receiving a mode of light reflected by the mirror surface 13d of the reflector mirror 13c. The scanner 6 hence reads data of a frame image on the negative film 14a loaded in the negative mask 14 when the reflective mirror 13c is located across the exposure axis L.

In addition, cleaning brushes 23 and 24 serving as dust removing means is mounted on a frame base 22 disposed above the various focal lens 13b, reflector mirror 13c, and zoom lens 13a on the lens carriage 11 (Figs.12 to 14).

The cleaning brush 23 comprises, as shown in Fig.13, a support 26 having a lowermost portion 25 thereof bent at a right angle and shaped of a V configuration, a brush holder 27 mounted to an outer side of the support 26, a brush 28 consisting of a multiplicity of horse hairs planted in the brush holder 27, and a bolt 29 by which the support 26 is secured to the lens carriage 11. The brush 28 of the cleaner brush 23 cleans with its distal end 28a a lens 6a of the scanner 6 as the lens carriage 11 travels.

The cleaning brush 23 is specifically located on the lens carriage 11 so that it never disturbs the scanner 6 reading of image data from the negative film 14a through the reflector mirror 13c across the exposure axis L (Fig.17).

Also, the cleaning brush 24 is mounted by screws 32 to a lower side of the frame base 22. The cleaning brush 24 comprises a brush holder 30 and a brush 31 consisting of a multiplicity of horse hairs planted in the brush holder 30. The cleaning brush 24 is, hence, the brush 31 sweeps with its distal end 31a over the surface 13e of the zoom lens 13a as the lens carriage 11 travels.

In the photographic exposure apparatus of this embodiment, the lens carriage 11 is moved by the motor 15f (Fig.17) rotating the leadscrew 15e until the reflector mirror 13c comes across the exposure axis L. Then, the scanner 6 is actuated to read data of a desired frame image on the negative film 14a. This is followed by further movement of the lens carriage 11 to select the various focal lens 13b or zoom lens 13a for exposing the printing paper P₁ at the exposure location L, to an intensity of light.

As the lens carriage 11 travels forward and backward, the cleaning brush 23 run directly and sweeps with its brush end 28a over the lens 6a of the scanner 6 thus removing dust.

Simultaneously, the cleaning brush 24 mounted to the frame base 22 runs directly on the surface 13e of the zoom lens 13a and removes dust from the same during the traveling of the lens carriage 11.

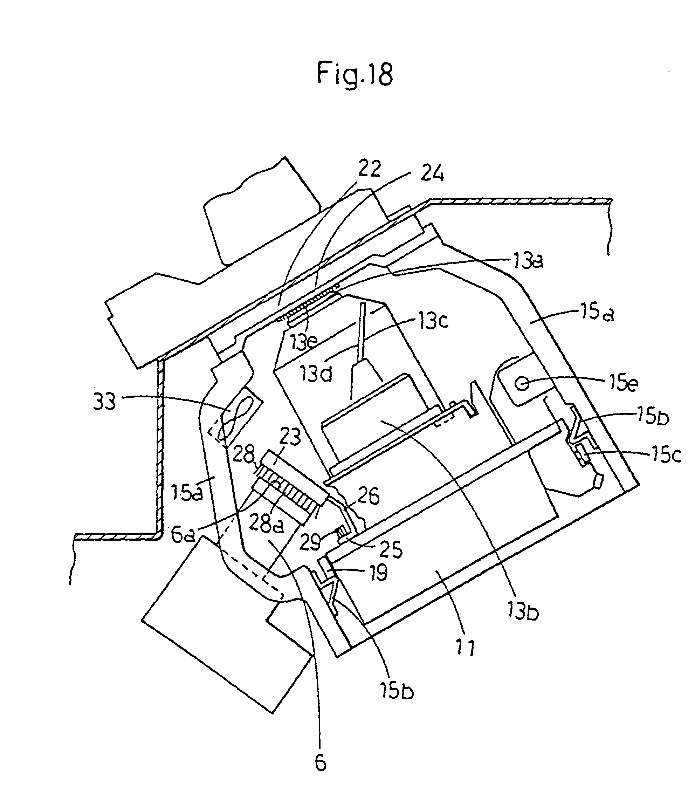

Fig.18 illustrates a further detail of the photographic exposure apparatus of the present invention, in which like components are denoted by like numerals as those in the previous embodiments and will be explained in no more details. In this embodiment, a fan 33 is mounted to the frame 15a above the lens 6a of the scanner 6 for blowing diagonally toward below. In action, the fan 33 blows against the lens 6a of the scanner 6 and the cleaning brush 23 on the lens carriage 11 thus promoting the removal of dust from the lens 6a and the cleaning brush 23.

Although the brushes 28 and 31 of the cleaning brushes 23 and 24 are made of horse hairs in the embodiments, they may employ polyester, nylon, carbon fiber, acrylic copper compound (providing electrostatic discharge effect), and other materials.

## Claims

1. A photographic exposure apparatus comprising an exposure lens (13); a lens carriage (11) having a light shield region (11b) and a lens mount region (11a); a switching means (15) for moving the lens carriage to locate selectively the lens across the axis (L) of exposure light; a first shutter (S) for controlling the exposure light;
**characterised in that** the photographic exposure apparatus further comprises a second shutter (S2) for preventing the exposure to scattered light; and a mechanical linking means (16) responsive to the movement of the lens carriage (11) for closing and opening the second shutter (S2), such that when the lens (13) on the lens carriage (11) is dislocated from the axis of exposure light in a standby mode, the mechanical linking means (16) closes the second shutter (S2) to interrupt the scattered light, and when the lens (13) is across the axis (L) of exposure light in an exposure mode, the mechanical linking means (16) opens the second shutter (S2).

2. A photographic exposure apparatus according to claim 1, wherein the mechanical linking means (16) comprises a projection (16a; 16b) which is disposed on the second shutter (S2) and actuated by the lens carriage (11) for opening and closing the second shutter.

3. A photographic exposure apparatus is claimed in claim 1 wherein the exposure lens (13) is arranged movable forward and backward by a forward and backward travelling means (15b, 11, 15c, 15e, 15f, 15h) and a dust removing means (23, 24) is mounted to a casing (1) for removing dust from the exposure lens (13) during the forward and backward movement of the exposure lens.

4. A photographic exposure apparatus according to claim 1 for reading data of a desired image from a negative film with a scanner (6) and projecting the image through an exposure lens (13) onto a sheet of printing paper located at a certain exposure position, wherein the exposure lens (13) is arranged movable forward and backward by a forward and backward travelling means (15b, 11, 15c, 15e, 15f, 15h), the scanner (6) is mounted to a casing (1) adjacent to the forward and backward travelling means, and dust removing means (23, 24) are mounted to the forward and backward travelling means and/or the casing for removing dust from the exposure lens (13) and/or the scanner (6) during the forward and backward movement of the travelling means.

5. A photographic exposure apparatus according to claim 3 or wherein a fan (33) is mounted to an appropriate location of the casing (1) for assisting or helping the dust removing action of the dust removing means (23, 24).

6. A photographic exposure apparatus as claimed in any one preceding claim, wherein the lens carriage (11) has a reflector mirror (13c) mounted on its light shield region (11b) and also carries a scanner (6) for reading through the reflector mirror data of a desired frame image on a negative film.

## Patentansprüche

1. Fotografische Belichtungsvorrichtung, die folgendes aufweist: eine Belichtungslinse (13), einen Linsenschlitten (11) mit einem Lichtabschirmungsbereich (11b) und einem Linsenfassungsbereich (11a), ein Schaltmittel (15) zur Bewegung des Linsenschlittens, um die Linse selektiv quer zur Achse (L) des Belichtungslichtes zu positionieren, einen ersten Verschluß (S) zur Steuerung des Belichtungslichtes,
**dadurch gekennzeichnet, daß** die fotografische Belichtungsvorrichtung außerdem folgendes aufweist: einen zweiten Verschluß (S2), um die Belichtung durch gestreutes Licht zu verhindern, und ein mechanisches Verkettungsmittel (16), das auf die Bewegung des Linsenschlittens (11) anspricht, um den zweiten Verschluß (S2) zu schließen und zu öffnen, derartig, daß das mechanische Verkettungsmittel (16) den zweiten Verschluß (S2) schließt, um das Streulicht zu unterbrechen, wenn die Linse (13) auf dem Linsenschlitten (11) in einem Bereitschaftsmodus gegenüber der Achse des Belichtungslichtes disloziert ist, und das mechanische Verkettungsmittel (16) den zweiten Verschluß (S2) öffnet, wenn sich die Linse (13) in einem Belichtungsmodus quer zur Achse (L) des Belichtungslichtes befindet.

2. Fotografische Belichtungsvorrichtung nach Anspruch 1, bei der das mechanische Verkettungsmittel (16) einen Vorsprung (16a; 16b) aufweist, der sich auf dem zweiten Verschluß (S2) befindet und durch den Linsenschlitten (11) betätigt wird, um den zweiten Verschluß zu öffnen und zu schließen.

3. Fotografische Belichtungsvorrichtung nach Anspruch 1, bei der die Belichtungslinse (13) so angeordnet ist, daß sie durch ein Vorwärts- und Rückwärtsgangmittel (15b, 11, 15c, 15e, 15f, 15h) vorwärts und rückwärts bewegt werden kann, und an einem Gehäuse (1) ein Staubentfernungsmittel (23, 24) angebracht ist, um während der Vorwärts- und Rückwärtsbewegung der Belichtungslinse Staub von der Belichtungslinse (13) zu entfernen.

4. Fotografische Belichtungsvorrichtung nach Anspruch 1 zum Lesen von Daten eines gewünschten Einzelbildes von einem Negativfilm mit einem Scanner (6) und zum Projizieren des Einzelbildes durch eine Belichtungslinse (13) auf ein Blatt Druckpapier, das sich an einer bestimmten Belichtungsposition befindet, bei der die Belichtungslinse (13) so angeordnet ist, daß sie durch ein Vorwärts- und Rückwärtsgangmittel (15b, 11, 15c, 15e, 15f, 15h) vorwärts und rückwärts bewegt werden kann, der Scanner (6) an einem Gehäuse (1) im Anschluß an das Vorwärts- und Rückwärtsgangmittel angebracht ist und an dem Vorwärts- und Rückwärtsgangmittel und/oder dem Gehäuse ein Staubentfernungsmittel (23, 24) angebracht ist, um während der Vorwärts- und Rückwärtsbewegung der Gangmittel Staub von der Belichtungslinse (13) und/oder dem Scanner (6) zu entfernen.

5. Fotografische Belichtungsvorrichtung nach Anspruch 3, bei der an einer geeigneten Stelle des Gehäuses (1) ein Gebläse (33) angebracht ist, um die Staubentfernungswirkung der Staubentfernungsmittel (23, 24) zu unterstützen oder zu fördern.

6. Fotografische Belichtungsvorrichtung nach einem der vorhergehenden Ansprüche, bei welcher der Linsenschlitten (11) einen Reflexspiegel (13c) hat, der auf dem Lichtabschirmungsbereich (11b) angebracht ist, und auch einen Scanner (6) zum Lesen von Daten eines gewünschten Einzelbildes auf einem Negativfilm durch den Reflexspiegel trägt.

## Revendications

1. Appareil d'exposition photographique comprenant un objectif d'exposition (13); un porte-objectif (11) comportant une région de protection contre la lumière (11b) et une région de montage des objectifs (11a); un moyen de commutation (15) pour déplacer le porte-objectif pour positionner sélectivement l'objectif à travers l'axe (L) de la lumière d'exposition; un premier obturateur (S) pour assurer la commande de la lumière d'exposition;
**caractérisé en ce que** l'appareil d'exposition photographique comprend en outre un deuxième obturateur (S2) pour empêcher l'exposition à la lumière diffusée; et un moyen de liaison mécanique (16) réagissant au déplacement du porte-objectif (11) pour fermer et ouvrir le deuxième obturateur (S2), de sorte que lorsque l'objectif (13) sur le porte-objectif (11) est décalé par rapport à l'axe de la lumière d'exposition dans un mode d'attente, le moyen de liaison mécanique (16) ferme le deuxième obturateur (S2) pour interrompre le passage de la lumière diffusée, et que lorsque l'objectif (13) traverse l'axe (L) de la lumière d'exposition dans un mode d'exposition, le moyen de liaison mécanique (16) ouvre le deuxième obturateur (S2).

2. Appareil d'exposition photographique selon la revendication 1, dans lequel le moyen de liaison mécanique (16) comprend une saillie (16a; 16b) agencée sur le deuxième obturateur (S2) et actionnée par le porte-objectif (11) pour ouvrir et fermer le deuxième obturateur.

3. Appareil d'exposition photographique selon la revendication 1, dans lequel l'objectif d'exposition (13) est agencé de sorte à pouvoir être déplacé vers l'avant et vers l'arrière par l'intermédiaire d'un moyen de déplacement vers l'avant et vers l'arrière (15b, 11, 15c, 15e, 15f, 15h), un moyen d'élimination des poussières (23, 24) étant monté sur un boîtier (1) pour éliminer les poussières de l'objectif d'exposition (13) au cours du déplacement vers l'avant et vers l'arrière de l'objectif d'exposition.

4. Appareil d'exposition photographique selon la revendication 1, destiné à lire les données d'une image voulue sur un film négatif par l'intermédiaire d'un scanner (6) et à projeter l'image à travers un objectif d'exposition (13) sur une feuille de papier d'impression agencée au niveau d'une position d'exposition définie, l'objectif d'exposition (13) étant agencé de sorte à pouvoir être déplacé vers l'avant et vers l'arrière par l'intermédiaire d'un moyen de déplacement vers l'avant et vers l'arrière (15b, 11, 15c, 15e, 15f, 15h), le scanner (6) étant monté sur un boîtier (1) adjacent au moyen de déplacement vers l'avant et vers l'arrière, des moyens d'élimination des poussières (23, 24) étant montés sur le moyen de déplacement vers l'avant et vers l'arrière et/ou sur le boîtier pour éliminer les poussières de l'objectif d'exposition (13) et/ou du scanner (6) au cours du déplacement vers l'avant et vers l'arrière du moyen de déplacement.

5. Appareil d'exposition photographique selon la revendication 3, dans lequel un ventilateur (33) et monté en un emplacement approprié du boîtier (1) pour assister ou faciliter l'élimination des poussières par les moyens d'élimination des poussières (23, 24).

6. Appareil d'exposition photographique selon l'une quelconque des revendications précédentes, dans lequel le porte-objectif (11) comporte un miroir réfléchissant (13c) monté dans sa région de protection contre la lumière (11b) et comportant aussi un scanner (6) pour lire à travers le miroir réfléchissant les données d'une image voulue sur un film négatif.
